# FASCICULE DE BREVET EUROPEEN

(11) **EP 0 891 572 B1**
(45) Date de publication et mention de la délivrance du brevet: **12.07.2000**
(21) Numéro de dépôt: 97919464.4
(22) Date de dépôt: 02.04.1997
(51) Int. Cl.: G02B 6/44, H02G 15/117

(54) **DISPOSITIF DE RACCORDEMENT D'AU MOINS DEUX CABLES MULTIBRINS**
KOPPLUNGSVORRICHTUNG FÜR WENIGSTENS ZWEI MEHRSTRÄNGIGE KABEL
DEVICE FOR CONNECTING TWO OR MORE MULTIWIRE CABLES

(30) Priorité: 05.04.1996 FR 9604368
(43) Date de publication de la demande: 20.01.1999
(73) Titulaire: POUYET S.A., 94207 Ivry sur Seine (FR)
(72) Inventeur: DILLAT, Michel, F-92400 Courbevoie (FR)
(74) Mandataire: Wind, Jacques
(86) Numéro de dépôt international: FR9700589
(87) Numéro de publication internationale: WO9738337

(56) Documents cités:
- EP-A- 0 051 510
- EP-A- 0 243 234
- DE-A- 3 627 599
- DE-A- 4 016 694
- FR-A- 2 696 555

## Description

La présente invention concerne d'une manière générale un dispositif assurant le raccordement de câbles multibrins.

De tels dispositifs sont utilisés pour assurer la jonction de câbles disposés les uns à la suite des autres de manière à relier deux points même très éloignés d'une ligne. Ces dispositifs sont mis en oeuvre pour tous les types de câbles, par exemple en cuivre, coaxiaux ou optiques.

Le dispositif de raccordement selon l'invention est plus particulièrement, mais non exclusivement, destiné au raccordement de câbles optiques multibrins pour lesquels il est nécessaire d'observer des règles particulières de câblage du fait de la fragilité des fibres optiques les composant, de la réserve de fibres optiques, du respect des rayons de courbures minimaux, etc.

Les câbles multibrins se composent d'une pluralité de brins, fil de cuivre ou fibre optique par exemple, transmettant chacun une information, donnée ou courant. Le raccordement de deux câbles multibrins nécessite le raccordement de chaque brin du câble amont à un brin correspondant du câble aval.

Un tel dispositif de raccordement peut, de manière connue en soi, assurer le raccordement de plusieurs câbles disposés en amont à plusieurs câbles disposés à l'aval, le nombre total des brins présentés en amont devant être égal au nombre total des brins présentés en aval.

La connexion de ces brins est réalisée par des moyens de connexion de tout type connu en soi, par exemple par une épissure ou un connecteur.

Le raccordement des câbles optiques est généralement réalisé à l'heure actuelle à l'aide de dispositifs comportant des éléments, appelés cassettes de lovage, disposés les uns à côté des autres. Chaque cassette de lovage assure le lovage et la connexion d'une ou de plusieurs fibres optiques des câbles optiques amont et aval.

Les cassettes de lovage sont montées mobiles en rotation autour d'un axe afin de permettre à l'utilisateur de les déplacer à la manière des pages d'un livre pour avoir accès à la cassette renfermant la ou les fibres sur lesquelles il désire intervenir.

Ces dispositifs sont d'utilisation fastidieuse et peu rapide puisqu'il est nécessaire à chaque intervention de faire pivoter les cassettes une par une pour rendre accessible la cassette contenant la (ou les) fibre(s) recherchée(s).

Ces dispositifs présentent de plus l'inconvénient de nécessiter la coupe des fibres à des longueurs largement différentes, variant en fonction de la position de la cassette sur laquelle elles sont prises en charge.

Peut également être cité le document DE-A-3627599 qui concerne un dispositif de connexion de deux câbles électriques pour courants forts, et dont l'âme est constituée d'une pluralité de brins. Ces brins sont ici interconnectés sans séparation ni écartement, au moyen d'une connexion par sertissage. Les brins d'écran de ce câble sont en revanche raccordés l'un à l'autre individuellement, au moyen de connecteurs séparés. Ils sont maintenus en position d'écartement et de parallélisme l'un par rapport à l'autre par des éléments de support et d'écartement. Dans un tel dispositif, les brins conducteurs proprement dits sont raccordés par un connecteur central de sertissage, sans aucun écartement ni séparation latérales.

L'invention propose de pallier les différents inconvénients des dispositifs connus en fournissant un dispositif de raccordement d'encombrement réduit et d'utilisation particulièrement aisée.

A cet effet, l'invention concerne un dispositif de raccordement d'au moins deux câbles multibrins, dans lequel chaque brin d'un câble disposé en amont est raccordé à un brin d'un câble disposé en aval par un moyen de connexion, par exemple une épissure ou un connecteur, caractérisé en ce que :
- il se compose d'un tambour et de deux moyens d'amarrage des faisceaux de brins des câbles à raccorder,
- lesdits moyens d'amarrage sont positionnés de part et d'autre du tambour globalement de manière symétrique et sensiblement sur le même axe que ledit tambour,
- le tambour porte, en des points régulièrement répartis près de sa périphérie, des moyens de positionnement desdits moyens de connexion,
- ces moyens de positionnement sont montés rotatifs autour de l'axe longitudinal du tambour, soit par des moyens de rotation supportant ce tambour, soit par au moins une couronne montée rotative par rapport au tambour,
de sorte que les brins maintenus par les moyens d'amarrage et disposés dans un moyen de connexion porté par le tambour forment de part et d'autre du tambour deux nappes coniques de brins ayant un moyen d'amarrage pour foyer, et que ces moyens de connexion sont accessibles l'un après l'autre par simple rotation de leurs moyens de positionnement autour de l'axe du tambour, et que ces moyens de connexion sont accessibles l'un après l'autre par simple rotation de leurs moyens de positionnement autour de l'axe longitudinal du tambour.

Le dispositif de raccordement selon l'invention est encore remarquable en ce que :
- le tambour est de forme cylindrique,
- le tambour a la forme générale d'un disque dont l'épaisseur est adaptée aux dimensions des moyens de connexion,
- les moyens d'amarrage sont constitués chacun par un anneau assurant le maintien des brins en faisceau,
- les moyens d'amarrage comportent un moyeu autour duquel sont disposés, les uns à côté des autres, les brins du câble à connecter et un moyen de maintien retenant lesdits brins en position autour du moyeu,
- le moyen de maintien est constitué de deux bagues montées mobiles en rotation autour du moyeu, disposées l'une contre l'autre et présentant chacune une fente, de sorte qu'il est possible d'insérer les brins entre les bagues et le moyeu axial lorsque les fentes sont alignées alors que le retrait desdits brins est évité en tournant l'une des bagues par rapport à l'autre pour écarter les fentes dans la direction circonférentielle,
- les moyens de positionnement sont des entailles pratiquées à la périphérie du tambour,
- les moyens d'amarrage sont positionnés sur un moyeu commun qui porte également le tambour, par exemple constitué par un tube de diamètre constant,
- le moyeu de chaque moyen d'amarrage est constitué par un élément conique positionné avec son extrémité de plus grand diamètre contre le tambour et portant le moyen de maintien des brins à son extrémité de plus petit diamètre,
- le moyeu porte des ailettes entre lesquelles sont disposés les brins.

L'invention sera mieux comprise grâce à la description qui va suivre donnée à titre d'exemple non limitatif en référence aux dessins annexés dans lesquels :
- la figure 1 est une vue schématique de côté d'un exemple de réalisation d'un dispositif selon l'invention et comporte une vue agrandie d'un détail,
- la figure 2 est une vue de dessus du dispositif représenté à la figure 1,
- la figure 3 est une vue en perspective d'un second exemple de réalisation d'un dispositif selon l'invention,
- la figure 4 est une vue en perspective d'une variante de réalisation d'un dispositif de la figure 3,
- les figures 5a et 5b montrent un exemple de réalisation du moyen de maintien,
- la figure 6 est une vue schématique d'un manchon de raccordement de câbles mettant en oeuvre le dispositif de la figure 3,
- la figure 7 est une vue schématique du manchon de la figure 6, couvercle enlevé,
- la figure 8 est une vue de côté du manchon de la figure 6,
- les figures 9 à 13 montrent des exemples de réalisation du tambour du dispositif de raccordement suivant l'invention destinés au raccordement de câbles courants, à savoir respectivement des câbles contenant 128, 248, 496, 376 et 512 fibres optiques.

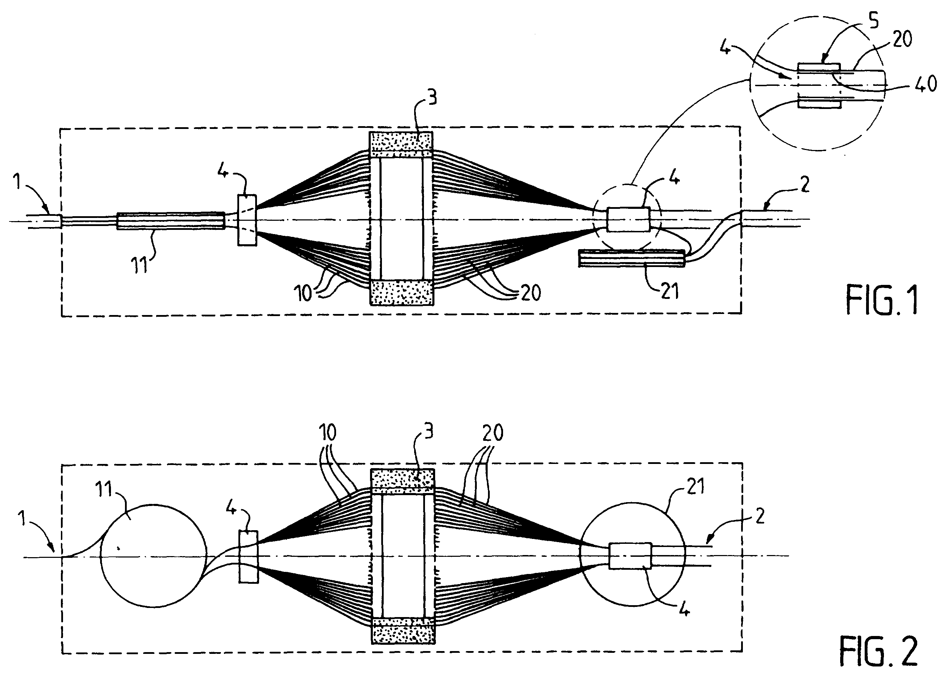

Comme représenté aux figures 1 et 2, un dispositif de raccordement permet le raccordement d'un câble amont 1 à un câble aval 2 et est usuellement positionné dans un manchon de raccordement schématisé à la figure 1 par le cadre dessiné en trait interrompu fin dans lequel il est enfermé de manière hermétique.

De manière connue en soi, le dispositif de raccordement peut assurer le raccordement de un ou plusieurs câbles disposés en amont à un ou plusieurs câbles disposés en aval, le nombre total de brins disposés en amont devant être égal au nombre de brins disposés en aval.

Le dispositif selon l'invention peut être mis en oeuvre pour le raccordement de câbles multibrins de tout type, en cuivre, coaxial ou optique.

De manière connue en soi, les câbles multibrins se composent d'une pluralité de brins. Dans le cas d'un câble optique, que nous considérons à titre d'exemple dans la présente description, les fibres optiques sont soit disposées en faisceau de fibres unitaires ou de microgaines à l'intérieur de la gaine du câble, soit réunies en rubans dans lesquels deux, quatre, six ou huit fibres sont disposées parallèlement les unes aux autres.

Pour leur raccordement, les câbles 1 et 2 sont épanouis en éléments unitaires composés de fibres individuelles, microgaines ou rubans suivant le type de câble utilisé.

A titre d'exemple, nous considérons dans la présente description l'utilisation du dispositif pour le raccordement de câbles optiques 1 et 2 formés de rubans 10 et 20 ; ces rubans sont une forme de mise en oeuvre des brins d'un câble multibrins.

Les rubans 10 et 20 libérés de la gaine des câbles sont lovés sur des disques 11, 21 de manière à disposer d'une réserve de fibres optiques en vue d'éventuelles modifications des connexions.

Le dispositif de raccordement suivant l'invention se compose d'un tambour 3 et de deux moyens d'amarrage 4 des faisceaux de brins respectivement du câble amont et du câble aval.

Le tambour 3 est de forme cylindrique et présente une section circulaire dans l'exemple de réalisation représenté au dessin. Ce tambour a la forme générale d'un disque dont l'épaisseur est adaptée aux dimensions des moyens de connexions mis en oeuvre, c'est-à-dire de l'ordre de quelques centimètres. Il peut être constitué par un disque épais, plein ou creux, ou par un anneau. Il peut encore être constitué de deux faces planes disposées parallèlement l'une à l'autre et reliées par une couronne de matière de diamètre égal ou inférieur au diamètre des deux faces planes.

Lesdits moyens d'amarrage 4 sont positionnés de part et d'autre du tambour 3, globalement de manière symétrique, en étant disposés sensiblement sur le même axe que ledit tambour 3.

Les faisceaux de rubans 10, 20 issus des câbles 1 et 2 sont respectivement positionnés dans l'un des moyens d'amarrage 4.

Il est possible d'utiliser des moyens d'amarrage 4 simplement constitués d'un anneau assurant le maintien des rubans en faisceau.

De préférence, lesdits moyens d'amarrage comportent un moyeu 40 autour duquel sont disposés, les uns à côté des autres, les rubans de fibres optiques et un moyen de maintien 5 retenant lesdits rubans en position autour du moyeu.

Ces moyens de maintien 5 peuvent être constitués par des bagues à serrage rapide, démontables ou non.

Le tambour 3 porte, en des points régulièrement répartis près de sa périphérie, des moyens de positionnement permettant le positionnement et le maintien des rubans 10 et 20 ou des moyens de connexion ; ces moyens de positionnement ne sont pas représentés aux figures 1 et 2.

A titre d'exemple, si la connexion de fibres optiques doit être réalisée par une épissure, l'on utilise un tambour 3 présentant deux faces planes externes de diamètre plus important que celui de la couronne qui les relie. Les moyens de positionnement sont alors prévus dans chacune des faces de manière à retenir les rubans 10 et 20. Ces rubans sont épanouis de manière à libérer les fibres individuelles sur lesquelles l'on réalise des épissures dans l'espace situé entre lesdites faces planes.

Si la connexion doit être réalisée à l'aide d'un connecteur, il est possible d'utiliser le même type de tambour, à faces planes dépassantes portant des moyens de positionnement des rubans de fibres en fixant les connecteurs à la couronne ou d'utiliser un tambour sans faces dépassantes à la périphérie duquel on a prévu des moyens de positionnement assurant le maintien desdits connecteurs.

De manière simple à réaliser, ces moyens de positionnement peuvent être des entailles 30 pratiquées à la périphérie du tambour.

Une inscription de tout type, chiffre, lettre ou signe, peut être imprimée près des entailles sur l'une et/ou l'autre des faces du tambour de manière à permettre le repérage des brins.

Lorsqu'il convient de positionner et maintenir chaque ruban sur le tambour, l'on forme des entailles en V de faible ouverture au fond desquelles les rubans peuvent être coincés.

Lorsque les moyens de positionnement doivent assurer la mise en place de connecteurs, la dimension et la forme des entailles 30 sont adaptées à la conformation du connecteur.

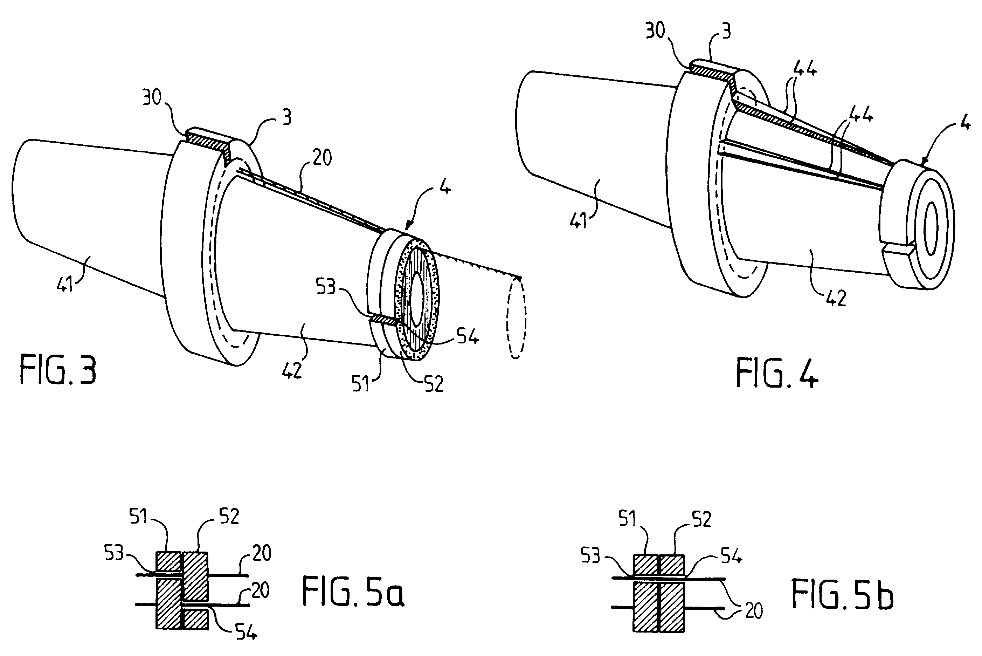

Un exemple de réalisation d'une telle entaille 30 destinée au positionnement d'un connecteur est représenté à la figure 3 ; cette entaille est de section carrée.

De telles entailles 30 sont prévues sur une grande partie de la périphérie du tambour.

Les rubans 10, 20 maintenus par les moyens d'amarrage 4 sont disposés un par un dans une entaille du tambour 3 ou dans un connecteur porté par ce tambour. Ce faisant on réalise de part et d'autre du tambour une nappe conique de rubans ayant un moyen d'amarrage 4 pour foyer.

Il est bien entendu possible de réaliser la connexion des fibres optiques avant de positionner les rubans, ou les connecteurs, dans les moyens de positionnement du tambour.

Le dispositif de raccordement suivant l'invention offre un accès aisé aux connexions du fait que celles-ci sont réparties sur une circonférence disposée autour de l'axe sur lequel sont amarrées les fibres.

Ce dispositif de raccordement utilise des rubans ayant des longueurs quasi identiques, ce qui évite tous les inconvénients dus à la nécessité de couper les rubans à des longueurs différentes en fonction de l'emplacement dans lequel on réalise leur connexion, que l'on connaît avec les dispositifs à cassettes de lovage.

Suivant un mode de réalisation non montré au dessin, les moyens d'amarrage 4 sont positionnés sur un moyeu commun 40 qui porte également le tambour 3.

Un tube de diamètre constant peut constituer une forme de réalisation simple d'un tel moyeu 40.

La figure 3 montre une variante de réalisation dans laquelle les moyeux de chaque moyen d'amarrage sont constitués par un élément conique 41, 42, chacun de ces éléments coniques étant positionné avec son extrémité de plus grand diamètre contre le tambour 3 et portant le moyen de maintien des rubans à son extrémité de plus petit diamètre ; un seul moyen de maintien est représenté par la figure 3.

Le diamètre de l'extrémité positionnée contre le tambour de chaque élément conique est, comme représenté au dessin, inférieur au diamètre de fond des entailles 30 de manière à laisser l'espace nécessaire à la mise en place des connecteurs autour desdits éléments coniques.

Une telle forme de réalisation, permet de limiter la possibilité de déplacement des rubans en direction de l'axe du dispositif de manière à réduire les risques de casse desdits rubans.

En effet, si l'on considère à nouveau les figures 1 et 2, l'on voit qu'à proximité des moyens d'amarrage 4, les rubans sont proches les uns des autres, tandis qu'ils s'éloignent les uns des autres d'autant plus que l'on se rapproche du tambour. Cet éloignement des rubans les rend vulnérables si par accident un objet vient les frapper.

La réalisation du moyeu en deux éléments coniques permet de proposer un dispositif dans lequel les rubans sont toujours disposés à faible distance d'une surface rigide. Si par accident un objet vient frapper ou pousser un ruban, la déformation de celui-ci est limitée par sa butée contre la paroi du moyeu et l'on évite la rupture de ce ruban.

Dans la forme de réalisation de la figure 4, le moyeu porte des ailettes 44 (dont quatre ont été représentées sur la partie 42) entre lesquelles sont disposés les rubans 10, 20.

Cette forme de réalisation permet une protection encore meilleure des rubans qui sont disposés à l'intérieur de l'espace défini par les ailettes et donc inaccessibles de l'extérieur.

Il est bien entendu possible de réaliser des ailettes semblables sur un moyeu commun tubulaire.

Une telle réalisation du moyeu commun avec un corps interne tubulaire et des ailettes triangulaires dont la partie haute est contre le tambour 3, permet de positionner chaque ruban dans un volume assez important pour autoriser la formation d'une réserve additionnelle de ruban. Il est en effet possible de positionner le ruban de manière lâche entre le moyen d'amarrage 4 et le tambour 3 ou même de former une ou plusieurs boucles de rubans que l'on dispose entre les ailettes 44. Cette réserve additionnelle autorise la modification de la connexion du ruban au niveau du tambour 3 sans qu'il soit nécessaire de sortir le ruban du moyen d'amarrage pour le repositionner après l'avoir déplacé en direction du tambour.

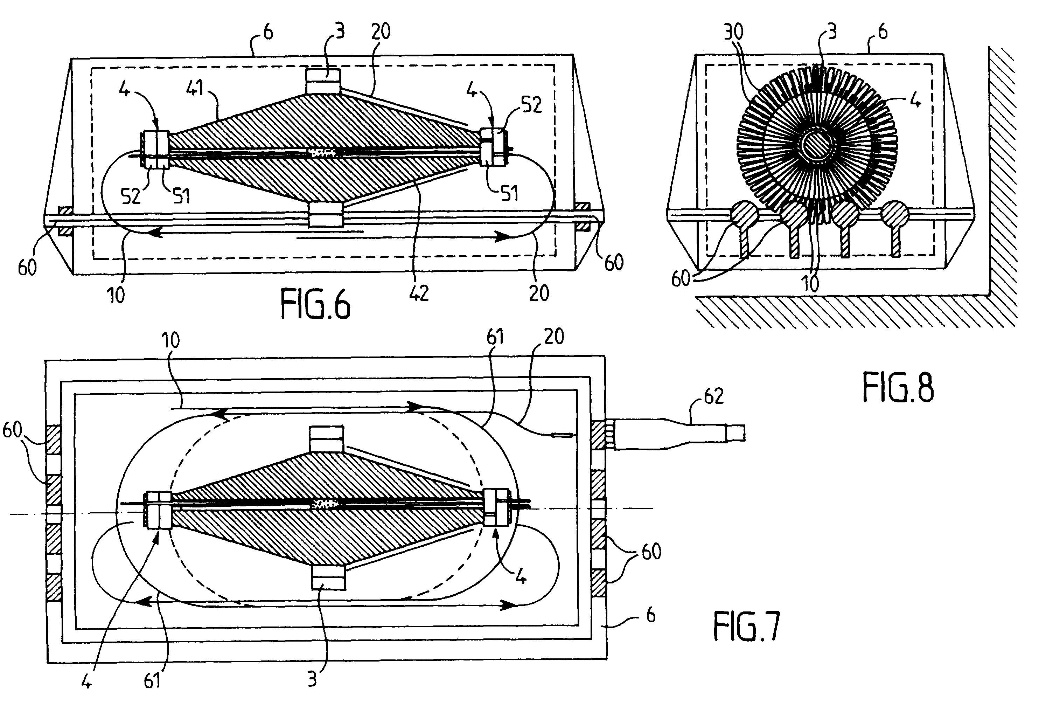

Les figures 5a et 5b représentent un exemple de réalisation particulièrement simple et efficace du moyen de maintien 5.

Ce moyen de maintien 5 est constitué de deux bagues 51 et 52 montées mobiles en rotation sur le moyeu, disposées l'une contre l'autre et présentant chacune une fente 53, 54.

Lorsque les bagues sont disposées comme représenté aux figures 3 et 5b, avec les fentes 53 et 54 alignées, il est possible d'insérer les rubans entre les bagues 51, 52, et le moyeu axial 40. Lorsque tous les rubans sont insérés, il suffit, pour empêcher le retrait desdits rubans, de faire tourner l'une des bagues par rapport à l'autre pour écarter les fentes 53, 54 dans la direction circonférentielle comme représenté à la figure 5a.

Les figures 6 à 8 illustrent l'utilisation d'un dispositif de raccordement selon l'invention dans un manchon de raccordement de câbles 6. Dans cet exemple, le manchon de raccordement de câbles est constitué par un boîtier globalement parallélépipèdique présentant sur chacune de ses faces d'extrémités quatre passages 60 pour des câbles tels que 62. Le dispositif de raccordement peut ainsi être mis en oeuvre pour raccorder de un à quatre câbles disposés en amont à un à quatre câbles disposés en aval.

L'on a schématisé sur ces figures la disposition des rubans suivant des boucles 61 permettant de créer des réserves de rubans assez importantes sans nécessiter l'utilisation de disques de lovage tels que les disques 21 et 11 des figures 1 et 2.

Un exemple de réalisation des différentes entailles permettant le positionnement des rubans, ou des connecteurs, sur le tambour 3 est visible sur la figure 8.

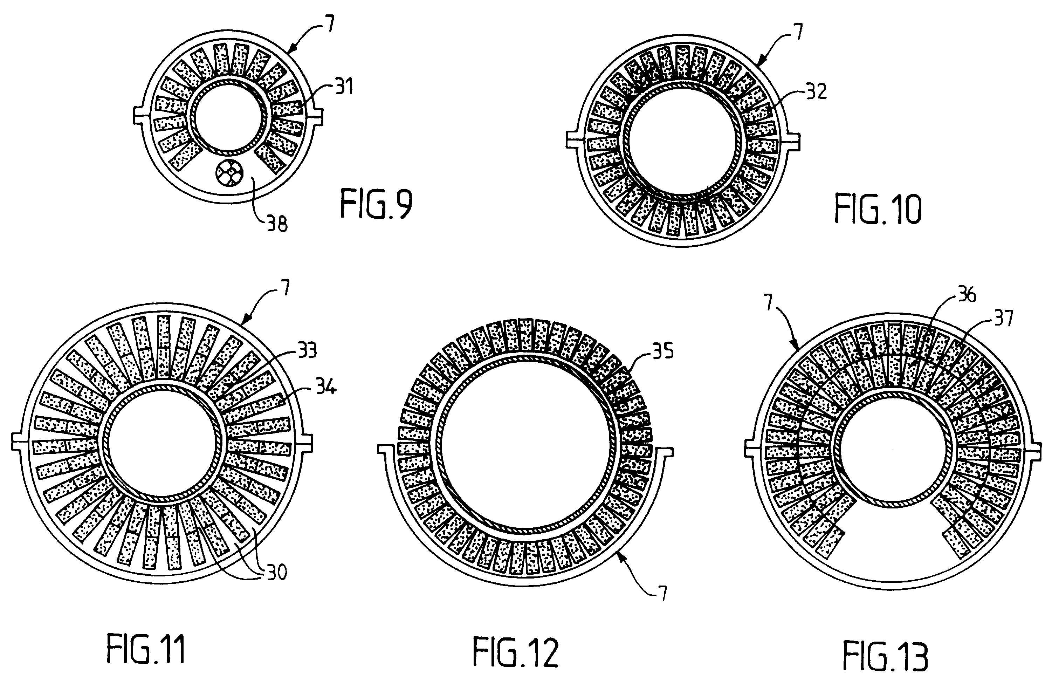

Les figures 9 à 13 montrent des exemples de réalisation du tambour 3 suivant la constitution des câbles pour cinq dimensions usuelles des câbles.

Ces tambours sont représentés dans des manchons de raccordement cylindrique 7.

Dans ces exemples de réalisation, les moyens de positionnement 30 sont portés par une ou des couronne (s) disposée (s) à la périphérie du tambour.

Le tambour représenté à la figure 9 est destiné au raccordement de câbles comportant 128 fibres optiques réparties en 16 rubans de 8 fibres. Dans cet exemple de réalisation, la couronne 31 n'occupe qu'une portion de la périphérie du tambour, un espace 38 restant libre et permettant le passage de câbles.

Le tambour représenté à la figure 10 est destiné au raccordement de câbles comportant 248 fibres optiques réparties en 31 rubans de 8 fibres. Le tambour portant la couronne 32 présentant 31 entailles.

Le tambour représenté à la figure 11 est destiné au raccordement de câbles comportant 496 fibres optiques réparties en 62 rubans de 8 fibres. Dans cet exemple de réalisation, le tambour porte deux couronnes 33 et 34 munies d'entailles 30. Les rubans sont tout d'abord positionnés dans les entailles de la couronne interne 33 en positionnant les entailles de la couronne 34 en correspondance de celles de la couronne 33 comme représenté au dessin. L'on fait ensuite tourner la couronne 34 de manière à fermer les entailles de la couronne 33, puis l'on positionne des rubans dans les entailles de cette couronne 34. Les rubans sont alors positionnés sur deux nappes coniques tout en restant facilement accessibles de l'extérieur.

Le tambour représenté à la figure 12 est un tambour de même structure que celui de la figure 10 mais porte une couronne 35 permettant le raccordement de câbles comportant 376 fibres optiques réparties en 47 rubans de 8 fibres.

Le tambour représenté à la figure 13 est destiné au raccordement de câbles comportant 512 fibres optiques réparties en 64 rubans de 8 fibres. Ce tambour est de même type que celui de la figure 11 et comporte deux couronnes 36, 37. Les entailles de la couronne externe sont fermées à leur extrémité interne. Les couronnes n'occupent qu'une portion de la circonférence du tambour. Il est alors possible d'enlever la couronne externe 37 par déformation élastique pour mettre en place les rubans dans les entailles de la couronne 36, puis de remettre en place cette couronne 37 pour positionner les rubans dans ses entailles.

On remarque que dans le dispositif suivant l'invention, l'accès à toute connexion entre deux brins est obtenu de manière très simple en faisant tourner le tambour autour de son axe, ou en faisant tourner le tambour et les moyens d'amarrage, les rubans étant positionnés de manière lâche entre le tambour et lesdits moyens d'amarrage ou entre lesdits moyens d'amarrage et les extrémités des gaines des câbles. Il est bien entendu possible, dans le cas où le tambour porte une couronne, d'assurer une simple rotation de cette couronne par rapport à la partie centrale du tambour.

Le dispositif suivant l'invention est encore particulièrement intéressant par le fait qu'il offre la possibilité d'effectuer les connexions de manière automatique à l'aide d'une machine sur laquelle le tambour est entraîné en rotation pas à pas. Des moyens de repérage de la position du tambour peuvent être utilisés pour permettre de faciliter l'automatisation.

Bien que le tambour du dispositif suivant l'invention a été décrit comme étant de section circulaire, l'on ne sortirait pas de la présente invention en prévoyant un tambour de toute forme cylindrique au sens large du terme ayant toute autre section, par exemple en ellipse, en losange, etc.

## Revendications

1. Dispositif de raccordement d'au moins deux câbles multibrins (1, 2), dans lequel chaque brin d'un câble disposé en amont est raccordé à un brin d'un câble disposé en aval par un moyen de connexion, par exemple une épissure ou un connecteur, caractérisé en ce que :
■ il se compose d'un tambour (3) et de deux moyens d'amarrage (4) des faisceaux de brins des câbles à raccorder,
■ lesdits moyens d'amarrage (4) sont positionnés de part et d'autre du tambour (3) globalement de manière symétrique et sensiblement sur le même axe que ledit tambour (3).
■ le tambour (3) porte, en des points régulièrement répartis près de sa périphérie, des moyens de positionnement (30) desdits moyens de connexion,
■ ces moyens de positionnement (30) sont montés rotatifs autour de l'axe longitudinal du tambour (3), soit par des moyens de rotation supportant ce tambour (3), soit par au moins une couronne (33,34) montée rotative par rapport au tambour (3),
de sorte que les brins maintenus par les moyens d'amarrage (4) et disposés dans des moyens de connexion portés par le tambour (3) forment de part et d'autre du tambour deux nappes coniques de brins ayant un moyen d'amarrage (4) pour foyer, et que ces moyens de connexion sont accessibles l'un après l'autre par simple rotation de leurs moyens de positionnement (30) autour de l'axe longitudinal du tambour (3).

2. Dispositif de raccordement selon la revendication 1, caractérisé en ce que le tambour (3) est de forme cylindrique.

3. Dispositif de raccordement selon la revendication 1 ou la revendication 2, caractérisé en ce que le tambour (3) a la forme générale d'un disque dont l'épaisseur est adaptée aux dimensions des moyens de connexion.

4. Dispositif de connexion selon l'une quelconque des revendications 1 à 3, caractérisé en ce que les moyens d'amarrage (4) sont constitués chacun par un anneau assurant le maintien des brins en faisceau.

5. Dispositif de connexion selon l'une quelconque des revendications 1 à 4, caractérisé en ce que lesdits moyens d'amarrage (4) comportent un moyeu (40) autour duquel sont disposés, les uns à côté des autres, les brins du câble à connecter et un moyen de maintien (5) retenant lesdits brins en position autour du moyeu (40).

6. Dispositif de raccordement selon la revendication 5, caractérisé en ce que le moyen de maintien (5) est constitué de deux bagues (51, 52) montées mobiles en rotation sur le moyeu, disposées l'une contre l'autre et présentant chacune une fente (53, 54) de sorte qu'il est possible d'insérer les brins entre les bagues (51, 52) et le moyeu axial (40) lorsque les fentes (53, 54) sont alignées alors que le retrait desdits brins est évité en tournant l'une des bagues par rapport à l'autre pour écarter les fentes (53, 54) dans la direction circonférentielle.

7. Dispositif de raccordement selon l'une quelconque des revendications précédentes, caractérisé en ce que les moyens de positionnement (30) sont des entailles pratiquées à la périphérie du tambour.

8. Dispositif de raccordement selon l'une des revendications précédentes, caractérisé en ce que les moyens d'amarrage (4) sont positionnés sur un moyeu commun (40) qui porte également le tambour (3), par exemple constitué par un tube de diamètre constant.

9. Dispositif selon l'une quelconque des revendications 5 à 7, caractérisé en ce que le moyeu (40) de chaque moyen d'amarrage (4) est constitué par un élément conique (41, 42) positionné avec son extrémité de plus grand diamètre contre le tambour (3) et portant le moyen de maintien des brins (5) à son extrémité de plus petit diamètre.

10. Dispositif de raccordement selon la revendication 8 ou selon le revendication 9, caractérisé en ce que le moyeu (40, 41, 42) porte des ailettes (44) entre lesquelles sont disposés les brins.

## Patentansprüche

1. Vorrichtung zur Verbindung mindestens zweier vieladriger Kabel (1, 2), wobei jede Ader eines ankommenden Kabels über ein Verbindungsmittel, z.B. eine Spleißstelle oder einen Steckverbinder, mit einer Ader eines abgehenden Kabels verbunden ist, **dadurch gekennzeichnet**, daß
- sie aus einer Trommel (3) und zwei Sicherungsmitteln (4) für Aderbündel der zu verbindenden Kabel besteht,
- die Sicherungsmittel (4) im wesentlichen symmetrisch beidseits der Trommel (3) und etwa auf der selben Achse wie die Trommel (3) angeordnet sind,
- die Trommel (3) an regelmäßig nahe ihres Umfangs verteilten Stellen Positioniermittel (30) für die Verbindungsmittel hat,
- die Positioniermittel (30) entweder über die Trommel (3) tragende Drehmittel oder über mindestens einen gegenüber der Trommel (3) drehbar angeordneten Kranz (33, 34) drehbar um die Längsachse der Trommel (3) angeordnet sind,
so daß die Adern, die mittels der Sicherungsmittel (4) gehalten und in den von der Trommel (3) getragenen Verbindungsmitteln angeordnet sind, beidseits der Trommel jeweils einen kegelförmigen Fächer aus Adern bilden, der als Mittelpunkt ein Sicherungsmittel (4) hat, und daß die Verbindungsmittel durch einfache um die Längsachse der Trommel (3) erfolgende Drehung ihrer Positioniermittel (30) nacheinander zugänglich sind.

2. Verbindungsvorrichtung nach Anspruch 1, dadurch gekennzeichnet, daß die Trommel (3) zylinderförmig ist.

3. Verbindungsvorrichtung nach Anspruch 1 oder 2, dadurch gekennzeichnet, daß die Trommel (3) im wesentlichen die Form einer Scheibe hat, deren Dicke den Abmessungen der Verbindungsmittel angepaßt ist.

4. Verbindungsvorrichtung nach einem der Ansprüche 1 bis 3, dadurch gekennzeichnet, daß die Sicherungsmittel (4) jeweils aus einem Ring bestehen, der die Adern in Bündeln hält.

5. Verbindungsvorrichtung nach einem der Ansprüche 1 bis 4, dadurch gekennzeichnet, daß die Sicherungsmittel (4) eine Anlagefläche (40) aufweisen, auf der die Adern des zu verbindenden Kabels nebeneinander angeordnet sind und über der ein Haltemittel (5) liegt, das die Adern auf der Anlagefläche (40) in Position hält.

6. Verbindungsvorrichtung nach Anspruch 5, dadurch gekennzeichnet, daß das Haltemittel (5) aus zwei Ringen (51, 52) besteht, die auf der Anlagefläche drehbar angeordnet sind, aneinander anliegen und jeweils einen Schlitz (53, 54) aufweisen, so daß die Adern zwischen die Ringe (51, 52) und die axiale Anlagefläche (40) eingebracht werden können, wenn die Schlitze (53, 54) miteinander fluchten, während das Lösen der Adern dadurch verhindert wird, daß zur Beabstandung der Schlitze (53, 54) in Umfangsrichtung einer der Ringe gegenüber dem anderen verdreht wird.

7. Verbindungsvorrichtung nach einem der vorstehenden Ansprüche, dadurch gekennzeichnet, daß die Positioniermittel (30) Markierungen sind, die am Umfang der Trommel liegen.

8. Verbindungsvorrichtung nach einem der vorstehenden Ansprüche, dadurch gekennzeichnet, daß die Sicherungsmittel (4) auf einer gemeinsamen Anlagefläche (40) liegen, die auch die Trommel (3) trägt, die z.B. aus einem Rohr konstanten Durchmessers besteht.

9. Vorrichtung nach einem der Ansprüche 5 bis 7, dadurch gekennzeichnet, daß die Anlagefläche (40) eines jeden Sicherungsmittels (4) durch ein kegelförmiges Bauteil (41, 42) gebildet ist, dessen Ende größten Durchmessers an der Trommel (3) anliegt und das das Haltemittel (5) für die Adern (5) an seinem Ende kleinsten Durchmessers trägt.

10. Verbindungsvorrichtung nach Anspruch 8 oder 9, dadurch gekennzeichnet, daß die Anlagefläche (40, 41, 42) Rippen (44) hat, zwischen denen die Drähte angeordnet sind.

## Claims

1. Device for connecting at least two multistrand cables (1, 2), in which each strand of a cable disposed upstream is connected to a strand of a cable disposed downstream by a connection means, for example a splice or a connector, characterized in that:
● it is composed of a drum (3) and of two means (4) for securing the bundles of strands of the cables to be connected,
● said securing means (4) are positioned on either side of the drum (3) overall symmetrically and substantially on the same axis as said drum (3),
● the drum (3) bears, at regularly spaced apart points near its periphery, means (30) for positioning said connection means,
● these positioning means (30) are mounted to rotate about the longitudinal axis of the drum (3), either by rotating means supporting this drum (3), or by at least one crown (33, 34) mounted to rotate with respect to the drum (3),
with the result that the strands held by the securing means (4), and disposed in connection means borne by the drum (3), form on either side of the drum two conical laps of strands having a securing means (4) for focus, and these connection means are accessible one after the other by simple rotation of their positioning means (30) about the longitudinal axis of the drum (3).

2. Connection device according to Claim 1, characterized in that the drum (3) is cylindrical in shape.

3. Connection device according to Claim 1 or Claim 2, characterized in that the drum (3) is generally in the shape of a disc whose thickness is adapted to the dimensions of the connection means.

4. Connection device according to any one of Claims 1 to 3, characterized in that the securing means (4) are each constituted by a ring ensuring hold of the strands in a bundle.

5. Connection device according to any one of Claims 1 to 4, characterized in that said securing means (4) comprise a hub (40) about which are disposed, aside one another, the strands of the cable to be connected and a holding means (5) retaining said strands in position about the hub (40).

6. Connection device according to Claim 5, characterized in that the holding means (5) is constituted by two rings (51, 52) mounted mobile in rotation on the hub, disposed against each other and each presenting a slit (53, 54) so that it is possible to insert the strands between the rings (51, 52) and the axial hub (40) when the slits (53, 54) are aligned, while withdrawal of said strands is avoided by rotating one of the rings with respect to the other to space apart the slits (53, 54) in the circumferential direction.

7. Connection device according to any one of the preceding Claims, characterized in that the positioning means (30) are notches made on the periphery of the drum.

8. Connection device according to one of the preceding Claims, characterized in that the securing means (4) are positioned on a common hub (40) which also bears the drum (3), for example constituted by a tube of constant diameter.

9. Device according to any one of Claims 5 to 7, characterized in that the hub (40) of each securing means (4) is constituted by a conical element (41, 42) positioned with its larger-diameter end against the drum (3) and bearing the strand-holding means (5) at its smaller-diameter end.

10. Connection device according to Claim 8 or Claim 9, characterized in that the hub (40, 41, 42) bears fins (44) between which the strands are disposed.
